# EUROPÄISCHE PATENTSCHRIFT

(11) **EP 3 485 232 B1**
(45) Veröffentlichungstag und Bekanntmachung des Hinweises auf die Patenterteilung: **15.09.2021**
(21) Anmeldenummer: 17733437.2
(22) Anmeldetag: 26.06.2017
(51) Int. Cl.: G01F 1/58, G01F 22/00, G01F 15/00

(54) **MAGNETISCH-INDUKTIVES DURCHFLUSSMESSGERÄT**
MAGNETOINDUCTIVE FLOWMETER
DÉBITMÈTRE MAGNÉTO-INDUCTIF

(30) Priorität: 12.07.2016 DE 102016112742
(43) Veröffentlichungstag der Anmeldung: 22.05.2019
(73) Patentinhaber: Endress+Hauser Flowtec AG, 4153 Reinach (CH)
(72) Erfinder: KÜNG, Thomas, CH-4142 Münchenstein (CH); BÄHR, Günther, 4106 Therwil (CH); VOIGT, Frank, 79576 Weil am Rhein (DE)
(74) Vertreter: Andres, Angelika Maria
(86) Internationale Anmeldenummer: PCT/EP2017/065697
(87) Internationale Veröffentlichungsnummer: WO 2018/010943

(56) Entgegenhaltungen:
- EP-A1- 1 106 974
- WO-A2-2009/158605
- DE-A1-102012 110 665
- DE-B3-102015 107 366
- JP-A- S59 180 437
- US-A1- 2009 173 168
- ROSE C ET AL: "NEW DEVELOPMENTS IN FLOW MEASUREMENTS: MAGMETER FOR PARTIALLY- FILLED PIPELINES", TECHNICAL PAPER OF ISA, INSTRUMENT SOCIETY OF AMERICA, Bd. 49, Nr. PART 01, 1994, Seiten 199-224, XP000622540, ISSN: 1054-0032

## Beschreibung

Die Erfindung betrifft ein magnetisch-induktives Durchflussmessgerät.

Magnetisch-induktive Durchflussmessgeräte werden bereits seit langer Zeit zur Durchflussmessung eingesetzt und haben sich bewährt. Das Prinzip der magnetisch-induktiven Durchflussmessung basiert auf der Induktion einer durchflussabhängigen elektrischen Spannung in einem leitfähigen, durch eine Rohrleitung fließendes Medium durch ein Magnetfeld, welches Magnetfeld senkrecht zur Flussrichtung ausgerichtet ist. Das Magnetfeld wird üblicherweise durch ein Spulensystem mit einer oder mehreren Spulen erzeugt. Die durchflussabhängige Spannung wird von mindestens zwei Messelektroden abgegriffen und von einer Messvorrichtung ausgewertet. Somit lässt sich aus der gemessenen Spannung und dem bekannten Magnetfeld der Durchfluss des Mediums durch die Rohrleitung bestimmen. Die Schriften DE 103 12 058 A1, EP 1 106 974 A1 und JPS 59 180 437 beschreiben ein solches Durchflussmessgerät.

Magnetisch-induktive Messgeräte sind robuste und günstig herzustellende Durchflussmessgeräte benötigen für den Messbetrieb eine elektrische Mindestleitfähigkeit des zu messenden Mediums. Im Falle einer geringen Leitfähigkeit des Mediums nimmt die Impedanz des Mediums zu und die Signalqualität ab, so dass üblicherweise Durchflussmessgeräte, welche auf anderen Messprinzipien basieren, zum Einsatz kommen.

Die Aufgabe der Erfindung ist es daher, ein magnetisch-induktives Durchflussmessgerät vorzuschlagen, bei welchem auch Medien mit geringen Leitfähigkeiten zuverlässig und mit hoher Genauigkeit vermessen werden können.

Die Aufgabe wird erfindungsgemäß gelöst durch ein magnetisch-induktives Durchflussmessgerät nach Anspruch 1, sowie durch eine Anordnung zur Messung der Durchflussgeschwindigkeit oder des Volumendurchflusses eines Mediums mittels eines magnetisch-induktiven Durchflussmessgeräts gemäß dem Anspruch 7 und durch eine Abfüllanlage gemäß dem Anspruch 13.

Ein erfindungsgemäßes magnetisch-induktives Durchflussmessgerät zur Messung der Durchflussgeschwindigkeit oder des Volumendurchflusses eines Mediums in einer Rohrleitung umfasst dabei:
ein Messrohr mit einer ersten Längsachse;
ein Magnetsystem mit mindestens einem ersten Spulensystem mit mindestens einer ersten Spule mit einem ersten Spulenkern, welches erste Spulensystem am Messrohr angeordnet ist, wobei das erste Spulensystem dazu eingerichtet ist, ein im Wesentlichen senkrecht zu einer ersten Längsachse des Messrohrs verlaufendes Magnetfeld zu erzeugen;
und mindestens zwei im Messrohr angeordnete Messelektroden, welche mit dem Medium gekoppelt und dazu eingerichtet sind, eine im Medium durch das Magnetfeld induzierte, durchflussabhängige Spannung zu erfassen;
und eine elektronische Mess-/Betriebsschaltung, welche dazu eingerichtet ist, die von den Messelektroden erfasste Spannung auszuwerten;
wobei das Magnetsystem mindestens eine Feldrückführung umfasst, welche dazu eingerichtet ist, das Magnetfeld außerhalb des Messrohrs zwischen der dem ersten Spulensystem gegenüberliegenden Messrohrseite und dem ersten Spulensystem zumindest teilweise zu führen,
wobei die Feldrückführung zwei Rückführungsbleche aufweist, welche auf gegenüberliegenden Seiten des Messrohrs angeordnet sind und wobei der erste Spulenkern dazu eingerichtet ist, das Magnetfeld zwischen dem Messrohr und der Feldrückführung zumindest teilweise zu führen und die magnetische Flussdichte im Spulensystem zu erhöhen, wobei die Rückführungsbleche durch einen Luftspalt voneinander getrennt sind.

Die Trennung der Rückführungsbleche durch einen Luftspalt führt zu einer schnelleren Anpassung der durch das Magnetfeld im Medium induzierten elektrischen Spannung bei Wechsel von einem ersten Feldzustand zu einem zweiten Feldzustand. Dadurch lässt sich die Frequenz der Zustandsänderung des Magnetfelds erhöhen, was das Signal-Rausch-Verhältnis der durch die Messelektroden erfassten induzierten Spannung positiv beeinflusst.

In einer Ausgestaltung des magnetisch-induktiven Durchflussmessgeräts stellt der Luftspalt einen Abstand der Rückführungsbleche zueinander sicher, wobei das Verhältnis von Abstand zu Dicke der Rückführungsbleche größer als 0.5 und insbesondere größer als 1 und bevorzugt größer als 1,5 ist.

In einer Ausgestaltung des magnetisch-induktiven Durchflussmessgeräts sind die Rückführungsbleche symmetrisch bezüglich einer Ebene, in welcher Ebene die erste Längsachse verläuft.

In einer Ausgestaltung des magnetisch-induktiven Durchflussmessgeräts weist die mindestens eine Spule des ersten Spulensystems eine zweite Längsachse auf, wobei der Luftspalt die zweite Längsachse, insbesondere senkrecht, schneidet. Die zweite Längsachse fällt dabei mit einer Symmetrieachse der Spule zusammen, wobei das Durchflussmessgerät auf der dem ersten Spulensystem gegenüberliegenden Seite mindestens ein zweites, insbesondere dem ersten Spulensystem baugleiches, Spulensystem mit mindestens einer zweiten Spule mit einem zweiten Spulenkern aufweist,
wobei das erste Spulensystem und das zweite Spulensystem dazu eingerichtet sind, ein im Wesentlichen senkrecht zur ersten Längsachse des Messrohrs und im Wesentlichen parallel zur zweiten Längsachse des ersten Spulensystems verlaufendes Magnetfeld zu erzeugen,
wobei der zweite Spulenkern dazu eingerichtet ist, das Magnetfeld zwischen dem Messrohr und der Feldrückführung zu führen und die magnetische Flussdichte im Spulensystem zu erhöhen, und wobei die Feldrückführung dazu eingerichtet ist, das Magnetfeld außerhalb des Messrohrs zwischen dem ersten Spulensystem und dem zweiten Spulensystem zumindest teilweise zu führen.

In einer Ausgestaltung des magnetisch-induktiven Durchflussmessgeräts ist die elektronische Mess-/Betriebsschaltung dazu eingerichtet, das Spulensystem zu speisen, um in einer Messphase zum Aufnehmen von mindestens einem Spannungswert zur Bestimmung der Durchflussgeschwindigkeit oder dem Volumendurchfluss ein im Wesentlichen konstantes Magnetfeld zu erzeugen,
wobei die elektronische Mess-/Betriebsschaltung des Weiteren dazu eingerichtet ist, das Magnetfeld periodisch zwischen verschiedenen Feldzuständen zu schalten, und insbesondere die Polarität zu ändern,
wobei eine Frequenz einer Änderung der Feldzustände größer als 80 Hz und insbesondere größer als 120 Hz und bevorzugt größer als 200 Hz ist.

Durch eine Erhöhung der Frequenz der Zustandsänderung verbessert sich das Signal-Rausch-Verhältnis. Mit der Einrichtung eines Luftspalts zwischen den Rückführungsblechen lässt sich durch die schnellere Anpassung der durch das Magnetfeld im Medium induzierten elektrischen Spannung an ein geändertes Magnetfeld die Zustandsänderungsfrequenz weiter erhöhen und somit das Signal-Rausch-Verhältnis weiter verbessern.

Eine erfindungsgemäße Anordnung umfasst dabei:
mindestens eine Rohrleitung;
und mindestens ein magnetisch-induktives Durchflussmessgerät, umfassend:
   ein Messrohr;
   ein Magnetsystem mit mindestens einem ersten Spulensystem, welches erste Spulensystem dazu eingerichtet ist, ein im Wesentlichen senkrecht zu einer Längsachse des Messrohrs verlaufendes Magnetfeld zu erzeugen;
   und mindestens zwei im Messrohr angeordnete Messelektroden, welche mit dem Medium gekoppelt sind, und wobei die Messelektroden dazu eingerichtet sind, eine im Medium durch das Magnetfeld induzierte, durchflussabhängige Spannung zu erfassen;
   und eine elektronische Mess-/Betriebsschaltung, welche dazu eingerichtet ist, die von den Messelektroden erfasste Spannung auszuwerten;
   wobei das Medium über die Rohrleitung zum Messrohr des magnetisch-induktiven Messgeräts geführt wird, und wobei die Rohrleitung eine Verengung aufweist, welche auf der stromaufwärts gerichteten Seite des Durchflussmessgeräts angeordnet ist.

Die erfindungsgemäße Verengung weist in der Rohrleitung beziehungsweise im Messrohr eine Strömungsabrisskante auf, welche für eine Abflachung des Strömungsprofils des Mediums im Bereich der Messelektroden sorgt. Ein flaches Strömungsprofil im Bereich der Messelektroden ist vorteilhaft für das Signal-Rausch-Verhältnis.

In einer Ausgestaltung der Anordnung verringert die erste Verengung eine innere Querschnittsfläche der Rohrleitung beziehungsweise die zweite Verengung eine innere Querschnittsfläche des Messrohrs um mindestens 10% und insbesondere um mindestens 30% und bevorzugt um mindestens 50%.

In einer Ausgestaltung der Anordnung entspricht die Weglänge entlang der Strömungsrichtung des Mediums vom Beginn der Verengung bis zu den Messelektroden höchstens dem vierzigfachen und insbesondere höchstens dem zwanzigfachen und bevorzugt höchstens dem zehnfachen Innendurchmesser der Verengung.

In einer Ausgestaltung der Anordnung ist die elektronische Mess-/Betriebsschaltung dazu eingerichtet, das Spulensystem zu speisen, um in einer Messphase zum Aufnehmen von mindestens einem Spannungswert zur Bestimmung der Durchflussgeschwindigkeit oder dem Volumendurchfluss ein im Wesentlichen konstantes Magnetfeld zu erzeugen,
wobei die elektronische Mess-/Betriebsschaltung des Weiteren dazu eingerichtet ist, das Magnetfeld periodisch zwischen verschiedenen Feldzuständen zu schalten, und insbesondere die Polarität zu ändern,
wobei eine Frequenz einer Änderung der Feldzustände größer als 80 Hz und insbesondere größer als 120 Hz und bevorzugt größer als 200 Hz ist.

In einer Ausgestaltung weist die Anordnung eine Ableitung auf, welche auf der stromabwärts gerichteten Seite des Durchflussmessgeräts angeordnet ist, wobei das Medium über die Ableitung vom Durchflussmessgerät zu einem Behältnis geführt wird.

In einer Ausgestaltung der Anordnung weist die Ableitung ein Ventil auf, welches dazu eingerichtet ist, die Durchflussgeschwindigkeit oder den Volumendurchfluss des Mediums durch die Rohrleitung zu steuern.

Bei einer erfindungsgemäßen Abfüllanlage weist dabei ein Abfüllvolumen ein Volumen von mindestens 10 ml und insbesondere mindestens 50 ml und bevorzugt mindestens 200 ml auf.

In einer Ausgestaltung der Abfüllanlage weist dabei ein Abfüllvolumen ein Volumen von höchstens 10 l und insbesondere höchstens 5 l und bevorzugt höchstens 2 l auf.

In einer Ausgestaltung der Abfüllanlage ist die relative Abweichung des Abfüllvolumens bezüglich eines Soll-Abfüllvolumens kleiner als 1% und insbesondere kleiner als 0.3% und bevorzugt kleiner als 0.1%.

Im Folgenden wird die Erfindung anhand von einem Ausführungsbeispiel erläutert.
Fig. 1 zeigt eine schematische Anordnung mit einer erfindungsgemäßen Rohrleitung und einem erfindungsgemäßen magnetisch-induktiven Durchflussmessgerät.
Fig. 2 zeigt einen schematischen Querschnitt durch ein erfindungsgemäßes magnetisch-induktives Durchflussmessgerät.
Fig. 3 zeigt einen nicht erfindungsgemäßen Verfahrensablauf.
Fig. 4 zeigt einen schematischen Längsschnitt durch einen Leitungsverlauf einer erfindungsgemäßen Anordnung mit einer Rohrleitung und mit einem Messrohr eines an die Rohrleitung angeschlossenen erfindungsgemäßen magnetisch-induktiven Durchflussmessgeräts.

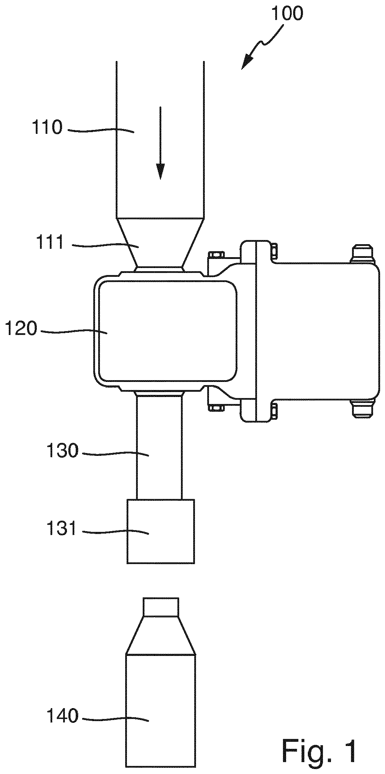

Fig. 1 zeigt eine Anordnung 100 umfassend ein magnetisch-induktives Durchflussmessgerät 120, eine Rohrleitung 110 mit einer ersten Verengung 111, und eine Ableitung 130 mit einem Ventil 131 sowie ein Behältnis 140. Ein Medium, welches durch die Rohrleitung 110 zum Durchflussmessgerät 120 geführt wird, erfährt durch die erste Verengung 111 eine Erhöhung der Durchflussgeschwindigkeit. Beispielsweise weist die Rohrleitung eine erste Verengung 111 auf, in welchem sich der Rohrquerschnitt stromabwärts zur ersten Verengung 111 hin kontinuierlich verringert, so dass der Strömungswiderstand im Vergleich zu einer abrupten Verengung weniger ansteigt. Bei laminaren Strömungen, deren Reynoldszahl R in der Nähe eines kritischen Werts R_{Krit} liegt, bei welchem ein Übergang in turbulentes Strömungsverhalten beobachtet werden kann, wirkt das stromabwärts gerichtete Ende der Verengung 111 als eine Strömungsabrisskante, welche eine Bildung und Ablösung von Strömungswirbeln bewirkt. Bei laminaren Strömungen weist das Strömungsprofil in guter Näherung eine Parabelform auf, so dass die Strömungsgeschwindigkeit an der Wandung der Rohrleitung 110 praktisch 0 und in der Mitte entlang einer Längsachse der Rohrleitung 110 maximal ist. Die Strömungswirbel beeinflussen eine Mediengrenzschicht, welche sich bei Messelektroden an der Grenzfläche Elektrodenmaterial ― Medium ausbildet.

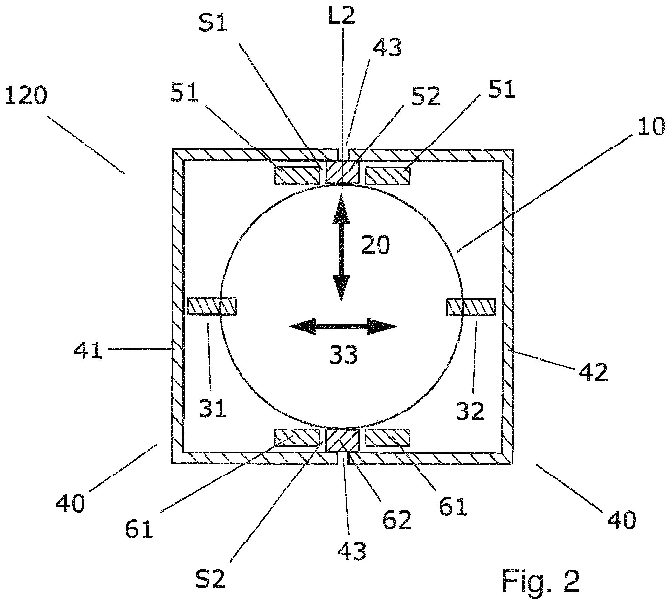

Fig. 2 zeigt einen schematischen Querschnitt durch ein magnetisch-induktives Durchflussmessgerät 120 welches ein Messrohr 10; und ein Magnetsystem mit einem ersten Spulensystem S1 mit einer ersten Spule 51 mit einem ersten Spulenkern 52 und ein zweites Spulensystem S2 mit einer zweiten Spule 61 mit einem zweiten Spulenkern 62 zur Erzeugung eines Magnetfelds 20, welches innerhalb des Messrohrs im Wesentlichen senkrecht zu einer Messrohrachse steht; und zwei Messelektroden 31, 32; und eine Feldrückführung 40 mit Rückführungsblechen 41 und 42 umfasst. Das Magnetfeld 20 erzeugt im durch das Messrohr 10 strömenden Medium eine durchflussabhängige Spannung 33, welche von den Messelektroden abgegriffen wird. Das Magnetfeld 20 wird außerhalb des Messrohrs über die metallische Feldrückführung 40 zwischen dem ersten Spulenkern 52 der ersten Spule 51 des ersten Spulensystems S1 und dem zweiten Spulensystem S2 geleitet. Die erfindungsgemäße Feldrückführung weist zwei Rückführungsbleche 41 und 42 auf, welche durch einen Luftspalt 43 voneinander getrennt sind. Die Rückführungsbleche 41, 42 liegen dabei auf einer dem Messrohr abgewandten Seite des ersten Spulenkerns 52 und auf einer dem Messrohr abgewandten Seite des zweiten Spulenkerns 62 auf. Der erste Spulenkern 52 und der zweite Spulenkern 62 können auf der dem Messrohr zugewandten Seite als Polschuh ausgeformt sein. Zwischen den Spulenkernen und dem Messrohr kann aber auch jeweils ein separater Polschuh angeordnet sein. Der Luftspalt zwischen den Rückführungsblechen 41, 42 hat zur Folge, dass sich nach einer Änderung der Feldstärke und/oder der Orientierung des Magnetfelds die im Medium induzierte elektrische Spannung 33 schneller an das geänderte Magnetfeld anpasst und einen neuen, im Wesentlichen konstanten Wert erreicht. Somit kann die Frequenz der Zustandsänderung des Magnetfelds weiter erhöht werden, was positive Auswirkungen auf das Signal-Rausch-Verhältnis der durch die Messelektroden 31, 32 abgegriffenen Spannung hat. Die Steuerung des ersten Spulensystems S1 und des zweiten Spulensystem S2 und die Auswertung der von den Messelektroden 31, 32 abgegriffenen Spannung wird von einer elektronischen Mess-/Betriebsschaltung sichergestellt, welche zur Vermeidung von Unübersichtlichkeit nicht in Fig. 2 aufgeführt ist. Ein erfindungsgemäßes magnetisch-induktives Durchflussmessgerät kann beispielsweise auch nur ein erstes Spulensystem umfassen, wobei die Rückführungsbleche auf der dem ersten Spulensystem S1 gegenüberliegenden Messrohrseite über ein Feldleitelement mit dem Messrohr verbunden sind.

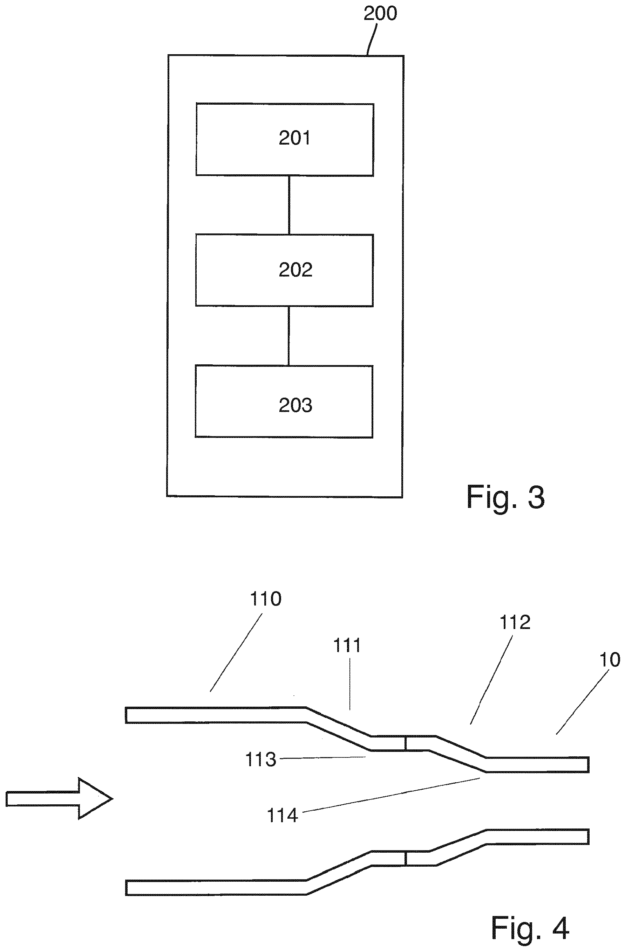

Fig. 3 zeigt einen Ablauf eines nicht erfindungsgemäßen Verfahrens 200. In einem ersten Verfahrensschritt 201 wird das durch das Messrohr 10 strömende Medium durch eine Verengung geführt, wobei sich an einer Strömungsabrisskante Turbulenzen im Medium ausbilden und ablösen, so dass das Strömungsprofil abgeflacht wird. In einem zweiten Verfahrensschritt 202 wird das Medium mit abgeflachtem Strömungsprofil an den Messelektroden 31, 32 im Messrohr 10 vorbeigeführt. In einem dritten Verfahrensschritt 203 wird das Medium nach Durchlaufen des Messrohrs 10 über eine Ableitung 130 mit einem Ventil 131 einem Behältnis 140 zugeführt.

Fig. 4 zeigt einen schematischen Längsschnitt durch einen Einlaufbereich einer erfindungsgemäßen Anordnung 100 mit einer Rohrleitung 110 und mit einem Messrohr 10 eines an die Rohrleitung 110 angeschlossenen erfindungsgemäßen magnetisch-induktiven Durchflussmessgeräts 120. Der Leitungsverlauf weist eine erste Verengung 111 in der Rohrleitung 110 und eine zweite Verengung 112 im Messrohr 10 auf, wobei die Querschnittsfläche der Rohrleitung 110 bzw. des Messrohrs 10 im Bereich der ersten Verengung 111 bzw. im Bereich der zweiten Verengung stromabwärts verringert wird. Ein Medium, welches durch die Rohrleitung 110 zum Durchflussmessgerät 120 geführt wird, erfährt durch die erste Verengung 111 eine Erhöhung der Durchflussgeschwindigkeit und durch die zweite Verengung 112 eine weitere Erhöhung der Durchflussgeschwindigkeit. Im Medium werden bei ausreichend hoher Strömungsgeschwindigkeit an Strömungsabrisskanten 113, 114 Strömungswirbel erzeugt. Die erste Verengung 111 und die zweite Verengung 112 haben durch die Erzeugung von Strömungswirbeln einen positiven Effekt auf das Signal-Rausch-Verhältnisses, insbesondere die Kombination der ersten Verengung 111 mit der zweiten Verengung 112 wirkt sich positiv auf das Signal-Rausch-Verhältnis aus. Die Verengungen sind dabei auf der stromaufwärts gerichteten Seite des Durchflussmessgeräts angeordnet.

### Bezugszeichenliste

- 10: Messrohr
- 20: Magnetfeld
- 31: Messelektrode
- 32: Messelektrode
- 33: elektrische Spannung
- 40: Feldrückführung
- 41, 42: Rückführungsblech
- 43: Luftspalt
- S1: erstes Spulensystem
- 51: erste Spule
- 52: erster Spulenkern
- L2: zweite Längsachse
- S2: zweites Spulensystem
- 61: zweite Spule
- 62: zweiter Spulenkern
- 100: Anordnung
- 110: Rohrleitung
- 111, 112: Verengung
- 113, 114: Strömungsabrisskante
- 120: magnetisch-induktives Durchflussmessgerät
- 130: Ableitung
- 131: Ventil
- 140: Behältnis
- 200: Verfahren
- 201: erster Verfahrensschritt
- 202: zweiter Verfahrensschritt
- 203: dritter Verfahrensschritt

## Patentansprüche

1. Magnetisch-induktives Durchflussmessgerät (120) zur Messung der Durchflussgeschwindigkeit oder des Volumendurchflusses eines Mediums in einem Messrohr umfassend:
ein Messrohr (10) mit einer ersten Längsachse;
ein Magnetsystem mit mindestens einem ersten Spulensystem (S1) mit mindestens einer ersten Spule (51) mit einem ersten Spulenkern (52), welches erste Spulensystem (S1) am Messrohr (10) angeordnet ist, wobei das erste Spulensystem dazu eingerichtet ist, ein im Wesentlichen senkrecht zu einer ersten Längsachse des Messrohrs (10) verlaufendes Magnetfeld (20) zu erzeugen;
und mindestens zwei im Messrohr (10) angeordnete Messelektroden (31, 32), welche mit dem Medium gekoppelt und dazu eingerichtet sind, eine im Medium durch das Magnetfeld (20) induzierte, durchflussabhängige Spannung (33) zu erfassen;
und eine elektronische Mess-/Betriebsschaltung, welche dazu eingerichtet ist, die von den Messelektroden (31,32) erfasste Spannung auszuwerten;
wobei das Magnetsystem mindestens eine Feldrückführung (40) umfasst, welche dazu eingerichtet ist, das Magnetfeld außerhalb des Messrohrs zwischen der dem ersten Spulensystem (S1) gegenüberliegenden Messrohrseite und dem ersten Spulensystem (S1) zumindest teilweise zu führen,
wobei die Feldrückführung (40) zwei Rückführungsbleche (41, 42) aufweist, welche auf gegenüberliegenden Seiten des Messrohrs angeordnet sind und wobei der erste Spulenkern (52) dazu eingerichtet ist, das Magnetfeld zwischen dem Messrohr und der Feldrückführung (40) zumindest teilweise zu führen,
**dadurch gekennzeichnet, dass** die Rückführungsbleche (41, 42) durch einen Luftspalt (43) voneinander getrennt sind.

2. Magnetisch-induktives Durchflussmessgerät (120) nach Anspruch 1, wobei der Luftspalt (43) einen Abstand der Rückführungsbleche zueinander sicherstellt, und wobei das Verhältnis von Abstand zu Dicke der Rückführungsbleche größer als 0.5 und insbesondere größer als 1 und bevorzugt größer als 1,5 ist.

3. Magnetisch-induktives Durchflussmessgerät (120) nach Anspruch 1 oder 2,
wobei die Rückführungsbleche (41, 42) symmetrisch bezüglich einer Ebene sind, in welcher Ebene die erste Längsachse verläuft.

4. Magnetisch-induktives Durchflussmessgerät (120) nach einem der vorigen Ansprüche,
wobei die mindestens eine erste Spule (51) des ersten Spulensystems (S1) eine zweite Längsachse (L2) aufweist, und wobei der Luftspalt (43) die zweite Längsachse (L2) schneidet.

5. Magnetisch-induktives Durchflussmessgerät (120) nach einem der vorigen Ansprüche,
wobei das magnetisch-induktive Durchflussmessgerät (120) auf der dem ersten Spulensystem (S1) gegenüberliegenden Seite mindestens ein zweites, insbesondere dem ersten Spulensystem baugleiches Spulensystem (S2) mit mindestens einer zweiten Spule (61) mit einem zweiten Spulenkern (62) aufweist,
wobei das erste Spulensystem (S1) und das zweite Spulensystem (S2) dazu eingerichtet sind, ein im Wesentlichen senkrecht zur ersten Längsachse des Messrohrs (10) und im Wesentlichen parallel zur zweiten Längsachse (L2) des ersten Spulensystems (S1) verlaufendes Magnetfeld zu erzeugen,
wobei der zweite Spulenkern (62) dazu eingerichtet ist, das Magnetfeld zwischen dem Messrohr (10) und der Feldrückführung (40) zumindest teilweise zu führen und die magnetische Flussdichte zu erhöhen, und wobei die Feldrückführung dazu eingerichtet ist, das Magnetfeld außerhalb des Messrohrs zwischen dem ersten Spulensystem (S1) und dem zweiten Spulensystem (S2) zumindest teilweise zu führen.

6. Magnetisch-induktives Durchflussmessgerät (120) nach einem der vorigen Ansprüche
wobei die elektronische Mess-/Betriebsschaltung dazu eingerichtet ist, das Spulensystem zu speisen, um in einer Messphase zum Aufnehmen von mindestens einem Spannungswert zur Bestimmung der Durchflussgeschwindigkeit oder des Volumendurchfluss ein im Wesentlichen konstantes Magnetfeld zu erzeugen, wobei die elektronische Mess-/Betriebsschaltung des Weiteren dazu eingerichtet ist, das Magnetfeld periodisch zwischen verschiedenen Feldzuständen zu schalten, und insbesondere die Polarität zu ändern,
wobei eine Frequenz einer Änderung der Feldzustände größer als 80 Hz und insbesondere größer als 120 Hz und bevorzugt größer als 200 Hz ist.

7. Anordnung (100) zur Messung der Durchflussgeschwindigkeit oder des Volumendurchflusses eines Mediums in einem Messrohr mittels des magnetisch-induktiven Durchflussmessgeräts (120) nach mindestens einem der Ansprüche 1 bis 5, umfassend:
mindestens eine Rohrleitung (110);
und mindestens das magnetisch-induktive Durchflussmessgerät (120):
**dadurch gekennzeichnet, dass**
die Rohrleitung (110) mindestens eine erste Verengung (111) und/oder das Messrohr (10) mindestens eine zweite Verengung (112) aufweist, welche auf der stromaufwärts gerichteten Seite des Durchflussmessgeräts (120) angeordnet sind/ist, und wobei die erste Verengung (111) bzw. die zweite Verengung (112) zumindest auf der stromabwärts gerichteten Seite eine Strömungsabrisskante (113, 114) aufweist.

8. Anordnung (100) nach Anspruch 7,
wobei die erste Verengung (111) beziehungsweise die zweite Verengung (112) eine innere Querschnittsfläche der Rohrleitung (110) beziehungsweise des Messrohrs (10) um mindestens 10% und insbesondere um mindestens 30% und bevorzugt um mindestens 50% verringert.

9. Anordnung (100) nach einem der Ansprüche 7 oder 8,
wobei die Weglänge entlang der Strömungsrichtung des Mediums vom Beginn der ersten Verengung (111) bis zu den Messelektroden (31, 32) höchstens dem zwanzigfachen und insbesondere höchstens dem zehnfachen und bevorzugt höchstens dem fünffachen Innendurchmesser des Messrohrs im Bereich der Messelektroden (31, 32) entspricht.

10. Anordnung (100) nach mindestens einem der Ansprüche 7 bis 9, wobei die elektronische Mess-/Betriebsschaltung dazu eingerichtet ist, das Spulensystem (S1, S2) zu speisen, um in einer Messphase zum Aufnehmen von mindestens einem Spannungswert zur Bestimmung der Durchflussgeschwindigkeit oder dem Volumendurchfluss ein im Wesentlichen konstantes Magnetfeld zu erzeugen,
wobei die elektronische Mess-/Betriebsschaltung des Weiteren dazu eingerichtet ist, das Magnetfeld periodisch zwischen verschiedenen Feldzuständen zu schalten, und insbesondere die Polarität zu ändern,
wobei eine Frequenz einer Änderung der Feldzustände größer als 80 Hz und insbesondere größer als 120 Hz und bevorzugt größer als 200 Hz ist.

11. Anordnung (100) nach mindestens einem der Ansprüche 7 bis 10, wobei die Anordnung (100) eine Ableitung (130) aufweist, welche auf der stromabwärts gerichteten Seite des magnetisch-induktiven Durchflussmessgeräts (120) angeordnet ist, wobei das Medium über die Ableitung (130) vom magnetisch-induktiven Durchflussmessgerät (120) zu einem Behältnis (140) geführt wird.

12. Anordnung (100) nach Anspruch 11,
wobei die Ableitung (130) ein Ventil (131) aufweist, welches dazu eingerichtet ist, die Durchflussgeschwindigkeit oder den Volumendurchfluss des Mediums durch die Rohrleitung (110) zu steuern.

13. Abfüllanlage mit einer Anordnung (100) nach einem der Ansprüche 7 bis 12.
wobei ein Abfüllvolumen ein Volumen von mindestens 10 ml und insbesondere mindestens 50 ml und bevorzugt mindestens 200 ml aufweist.

14. Abfüllanlage mit einer Anordnung (100) nach einem der Ansprüche 7 bis 12,
wobei ein Abfüllvolumen ein Volumen von höchstens 10 l und insbesondere höchstens 5 l und bevorzugt höchstens 2 l aufweist.

15. Abfüllanlage nach Anspruch 13 oder 14,
wobei die relative Abweichung des Abfüllvolumens bezüglich eines Soll-Abfüllvolumens kleiner als 1% und insbesondere kleiner als 0.3% und bevorzugt kleiner als 0.1% ist.

## Claims

1. Electromagnetic flowmeter (120) designed to measure the flow velocity or the volume flow of a medium in a measuring tube, comprising:
a measuring tube (10) with a first longitudinal axis;
a magnet system with at least a first coil system (S1) comprising at least a first coil (51) with a first coil core (52), wherein the first coil system (S1) is arranged on the measuring tube (10), wherein the first coil system is designed to generate a magnetic field (20) extending essentially perpendicularly to a first longitudinal axis of the measuring tube (10);
and at least two measuring electrodes (31, 32) arranged in the measuring tube (10),
wherein said electrodes are coupled with the medium and designed to measure a flow-dependent voltage (33), which is induced in the medium by the magnetic field (20);
and an electronic measurement/operation circuit, which is designed to evaluate the voltage measured by the measuring electrodes (31, 32);
wherein the magnet system comprises at least a field return unit (40), which is designed to at least partially guide the magnetic field outside the measuring tube between the side of the measuring tube opposite the first coil system (S1) and the first coil system (S1),
wherein the field return unit (40) comprises two return plates (41, 42), which are arranged on opposite sides of the measuring tube, and wherein the first coil core (52) is designed to at least partially guide the magnetic field between the measuring tube and the field return unit (40),
**characterized in that** the return plates (41, 42) are separated from one another by an air gap (43).

2. Electromagnetic flowmeter (120) as claimed in Claim 1, wherein the air gap (43) guarantees a distance between the return plates, and wherein the ratio of the distance to the thickness of the return plates is greater than 0.5 and particularly greater than 1 and preferably greater than 1.5.

3. Electromagnetic flowmeter (120) as claimed in Claim 1 or 2, wherein the return plates (41, 42) are symmetrical in relation to a plane on which the first longitudinal axis extends.

4. Electromagnetic flowmeter (120) as claimed in one of the previous claims, wherein the at least one first coil (51) of the first coil system (S1) has a second longitudinal axis (L2), and wherein the air gap (43) cuts the second longitudinal axis (L2).

5. Electromagnetic flowmeter (120) as claimed in one of the previous claims,
wherein, on the side opposite the first coil system (S1), the electromagnetic flowmeter (120) comprises at least a second coil system (S2), particularly identical in design to the first coil system, with at least a second coil (61) with a second coil core (62),
wherein the first coil system (S1) and the second coil system (S2) are designed to generate a magnetic field essentially perpendicular to the first longitudinal axis of the measuring tube (10) and essentially parallel to the second longitudinal axis (L2) of the first coil system (S1),
wherein the second coil core (62) is designed to at least partially guide the magnetic field between the measuring tube (10) and the field return unit (40) and to increase the magnetic flow density, and wherein the field return unit is designed to at least partially guide the magnetic field outside the measuring tube between the first coil system (S1) and the second coil system (S2).

6. Electromagnetic flowmeter (120) as claimed in one of the previous claims,
wherein the electronic measurement/operation circuit is designed to feed the coil system for the purpose of generating an essentially constant magnetic field in a measuring phase to record at least a voltage value used to determine the flow velocity or the volume flow, wherein, furthermore, the electronic measurement/operation circuit is designed to periodically switch the magnetic field between different field states, and particularly to change the polarity,
wherein a frequency of a change in the field states is greater than 80 Hz, particularly greater than 120 Hz and preferably greater than 200 Hz.

7. Arrangement (100) for measuring the flow velocity or the volume flow of a medium in a measuring tube using the electromagnetic flowmeter (120) as claimed in at least one of the Claims 1 to 5, wherein said arrangement comprises:
at least a pipe (110);
and at least the electromagnetic flowmeter (120);
**characterized in that**
the pipe (110) has at least a first constriction (111) and/or the measuring tube (10) has at least a second constriction (112), which is/are arranged on the upstream side of the flowmeter (120), and wherein the first constriction (111) or the second constriction (112) has a flow separation edge (113, 114) at least on the downstream side.

8. Arrangement (100) as claimed in Claim 7,
wherein the first constriction (111) or the second constriction (112) reduces an inner cross-section of the pipe (110) or the measuring tube (10) by at least 10 %, particularly by at least 30 % and preferably by at least 50 %.

9. Arrangement (100) as claimed in one of the Claims 7 or 8,
wherein the path length along the flow direction of the medium from the start of the first constriction (111) to the measuring electrodes (31, 32) corresponds at maximum to twenty times and particularly at maximum to ten times and preferably at maximum to five times the interior diameter of the measuring tube in the area of the measuring electrodes (31, 32).

10. Arrangement (100) as claimed in at least one of the Claims 7 to 9,
wherein the electronic measurement/operation circuit is designed to feed the coil system (S1, S2) for the purpose of generating an essentially constant magnetic field in a measurement phase to record at least a voltage value to determine the flow velocity or the volume flow,
wherein, furthermore, the electronic measurement/operation circuit is designed to periodically switch the magnetic field between different field states, and particularly to change the polarity,
wherein a frequency of a change in the field states is greater than 80 Hz, particularly greater than 120 Hz and preferably greater than 200 Hz.

11. Arrangement (100) as claimed in at least one of the Claims 7 to 10,
wherein the arrangement (100) comprises a discharge pipe (130) arranged on the downstream side of the electromagnetic flowmeter (120), wherein the medium is guided from the electromagnetic flowmeter (120) to a vessel (140) via the discharge pipe (130).

12. Arrangement (100) as claimed in Claim 11,
wherein the discharge pipe (130) has a valve (131) which is used to control the flow velocity or the volume flow of the medium through the pipe (110).

13. Batching installation with an arrangement (100) as claimed in one of the Claims 7 to 12, wherein a batching volume has a volume of at least 10 ml and particularly of at least 50 ml and preferably of at least 200 ml.

14. Batching installation comprising an arrangement (100) as claimed in one of the Claims 7 to 12,
wherein a batching volume has a volume of maximum 10 I and particularly of maximum 5 I and preferably of maximum 2 I.

15. Batching installation as claimed in Claim 13 or 14,
wherein the relative deviation of the batching volume in relation to a target batching volume is less than 1 % and particularly less than 0.3 % and preferably less than 0.1 %.

## Revendications

1. Débitmètre électromagnétique (120) destiné à la mesure de la vitesse d'écoulement ou du débit volumique d'un produit dans un tube de mesure, comprenant :
un tube de mesure (10) avec un premier axe longitudinal ;
un système magnétique avec au moins un premier système de bobines (S1) comprenant au moins une première bobine (51) avec un premier noyau de bobine (52), lequel premier système de bobines (S1) est disposé sur le tube de mesure (10), le premier système de bobines étant conçu pour générer un champ magnétique (20) s'étendant pour l'essentiel perpendiculairement à un premier axe longitudinal du tube de mesure (10) ;
et au moins deux électrodes de mesure (31, 32) disposées dans le tube de mesure (10), lesquelles électrodes sont couplées avec le produit et conçues pour mesurer une tension (33) dépendant du débit, induite dans le produit par le champ magnétique (20) ;
et un circuit électronique de mesure / d'exploitation, lequel est conçu pour exploiter la tension mesurée par les électrodes de mesure (31, 32) ;
le système magnétique comprenant au moins un retour de champ (40), lequel est conçu pour guider le champ magnétique au moins partiellement à l'extérieur du tube de mesure entre le côté du tube de mesure opposé au premier système de bobines (S1) et le premier système de bobines (S1),
le retour de champ (40) comprenant deux tôles de retour de champ (41, 42), lesquelles sont disposées sur des côtés opposés du tube de mesure, et le premier noyau de bobine (52) étant conçu pour guider au moins partiellement le champ magnétique entre le tube de mesure et le retour de champ (40),
**caractérisé en ce que** les tôles de retour de champ (41, 42) sont séparées l'une de l'autre par un entrefer (43).

2. Débitmètre électromagnétique (120) selon la revendication 1, pour lequel l'entrefer (43) garantit une distance entre les tôles de retour de champ, le rapport entre la distance et l'épaisseur des tôles de retour étant supérieur à 0,5 et notamment supérieur à 1 et de préférence supérieur à 1,5.

3. Débitmètre électromagnétique (120) selon la revendication 1 ou 2, pour lequel les tôles de retour de champ (41, 42) sont symétriques par rapport à un plan dans lequel s'étend le premier axe longitudinal.

4. Débitmètre électromagnétique (120) selon l'une des revendications précédentes, pour lequel l'au moins une première bobine (51) du premier système de bobines (S1) présente un deuxième axe longitudinal (L2), et l'entrefer (43) coupant le deuxième axe longitudinal (L2).

5. Débitmètre électromagnétique (120) selon l'une des revendications précédentes,
lequel débitmètre électromagnétique (120) comprend, sur le côté opposé au premier système de bobines (S1), au moins un deuxième système de bobines (S2), notamment de construction identique au premier système de bobines, comprenant au moins une deuxième bobine (61) avec un deuxième noyau de bobine (62),
pour lequel le premier système de bobines (S1) et le deuxième système de bobines (S2) sont conçus pour générer un champ magnétique pour l'essentiel perpendiculaire au premier axe longitudinal du tube de mesure (10) et pour l'essentiel parallèle au deuxième axe longitudinal (L2) du premier système de bobines (S1),
pour lequel le deuxième noyau de bobines (62) est conçu pour guider au moins partiellement le champ magnétique entre le tube de mesure (10) et le retour de champ (40) et augmenter la densité de flux magnétique, et le retour de champ étant conçu pour guider au moins partiellement le champ magnétique à l'extérieur du tube de mesure entre le premier système de bobines (S1) et le deuxième système de bobines (S2).

6. Débitmètre électromagnétique (120) selon l'une des revendications précédentes,
pour lequel le circuit électronique de mesure / d'exploitation est conçu de telle sorte à alimenter le système de bobines en vue de générer un champ magnétique sensiblement constant dans une phase de mesure pour enregistrer au moins une valeur de tension utilisée pour déterminer la vitesse d'écoulement ou le débit volumique,
pour lequel le circuit électronique de mesure / d'exploitation est en outre conçu pour commuter périodiquement le champ magnétique entre différents états de champ, et notamment pour changer la polarité,
pour lequel la fréquence d'un changement des états du champ est supérieure à 80 Hz, notamment supérieure à 120 Hz et de préférence supérieure à 200 Hz.

7. Arrangement (100) destiné à la mesure de la vitesse d'écoulement ou du débit volumique d'un produit dans un tube de mesure au moyen du débitmètre électromagnétique (120) selon au moins l'une des revendications 1 à 5, lequel arrangement comprend :
au moins un tuyau (110) ;
et au moins le débitmètre électromagnétique (120) ;
**caractérisé en ce que**
la conduite (110) présente au moins un premier rétrécissement (111) et/ou le tube de mesure (10) présente au moins un deuxième rétrécissement (112), qui sont disposés sur le côté amont du débitmètre (120), et le premier rétrécissement (111) ou le deuxième rétrécissement (112) présentant une arête de séparation d'écoulement (113, 114) sur au moins le côté aval.

8. Arrangement (100) selon la revendication 7,
pour lequel le premier rétrécissement (111) ou le deuxième rétrécissement (112) réduit une surface de section transversale intérieure de la conduite (110) ou du tube de mesure (10) d'au moins 10 %, notamment d'au moins 30 % et de préférence d'au moins 50 %.

9. Arrangement (100) selon l'une des revendications 7 ou 8,
pour lequel la longueur du trajet le long de la direction d'écoulement du produit à partir du début du premier rétrécissement (111) jusqu'aux électrodes de mesure (31, 32) correspond à au plus vingt fois, notamment au plus à dix fois et de préférence au plus à cinq fois le diamètre intérieur du tube de mesure dans la zone des électrodes de mesure (31, 32).

10. Arrangement (100) selon au moins l'une des revendications 7 à 9,
pour lequel le circuit électronique de mesure / d'exploitation est conçu pour alimenter le système de bobines (S1, S2), afin de générer un champ magnétique pour l'essentiel constant dans une phase de mesure pour enregistrer au moins une valeur de tension en vue de déterminer la vitesse d'écoulement ou le débit volumique,
pour lequel le circuit électronique de mesure / d'exploitation est en outre conçu pour commuter périodiquement le champ magnétique entre différents états de champ, et notamment pour changer la polarité,
une fréquence de changement des états de champ étant supérieure à 80 Hz, notamment supérieure à 120 Hz et de préférence supérieure à 200 Hz.

11. Arrangement (100) selon au moins l'une des revendications 7 à 10,
pour lequel l'arrangement (100) comprend une conduite d'évacuation (130) disposée sur le côté aval du débitmètre électromagnétique (120), le produit étant guidé via la conduite d'évacuation (130) à partir du débitmètre électromagnétique (120) vers un récipient (140).

12. Arrangement (100) selon la revendication 11,
pour lequel la conduite d'évacuation (130) comprend une vanne (131), laquelle est conçue pour commander la vitesse d'écoulement ou le débit volumique du produit à travers la conduite (110).

13. Installation de remplissage comprenant un arrangement (100) selon l'une des revendications 7 à 12,
pour laquelle un volume de remplissage présente un volume d'au moins 10 ml et notamment d'au moins 50 ml et de préférence d'au moins 200 ml.

14. Installation de remplissage comprenant un arrangement (100) selon l'une des revendications 7 à 12,
pour laquelle un volume de remplissage présente un volume d'au plus 10 l et notamment d'au plus 5 l et de préférence d'au plus 2 l.

15. Installation de remplissage selon la revendication 13 ou 14,
pour laquelle l'écart relatif du volume de remplissage par rapport à un volume de remplissage théorique est inférieur à 1 % et notamment inférieur à 0,3 % et de préférence inférieur à 0,1 %.
